# EUROPEAN PATENT APPLICATION

(11) **EP 0 579 357 A1**
(43) Date of publication of application: **19.01.1994**
(21) Application number: 93303640.2
(22) Date of filing: 11.05.1993
(51) Int. Cl.: F21V 8/00, G02B 6/38, G02B 6/42

(54) **A light distribution unit for use with a light projector which projects light via light guides**

(30) Priority: 15.05.1992 GB 9210436
(71) Applicant: Neave, Andrew John, Goudhurst, Kent TN17 2QX (GB)
(72) Inventor: Neave, Andrew John, Goudhurst, Kent TN17 2QX (GB)
(74) Representative: Jones, Graham H.

(57) **Abstract**

A light distribution unit (30) for use with a light projector (2) which projects light via light guides, the light distribution unit comprising a plurality of light distribution guides (32), a common end member (34) which is positioned at a first end of the light distribution guides (32) and which is formed by connecting together adjacent ends of the light distribution guides (32), and a light distribution arrangement (36) which is positioned at a second end of the light distribution guides (32), and the light distribution arrangement (36) being such that it has a plurality of outlet ports (38) each connected to one of the light distribution guides (32) and each for connection to a light guide (44) for use in projecting light from the light projector (2) via the light distribution unit (30) to a predetermined place.

## Description

This invention relates to a light distribution unit for use with a light projector which projects light via light guides. This invention also relates to the light projector. The light guides may be, for example, fibre optic light guides, fibre rod light guides, or polymer light guides.

Light projectors which project light via light guides are known. These known light projectors comprise a housing, a lamp which is positioned in the housing and which is for providing initial light, and a reflector which is also positioned in the housing and which is for reflecting light from the lamp. The reflector concentrates the light from the lamp onto an aperture provided at one end of the housing. A fibre optic harness is plugged into the aperture. The fibre optic harness is such that a plurality of individual optical fibres have their ends brought together to form a common end plug which slides into the aperture in the housing. If the common end plug and/or the ends of the optical fibres in the fibre optic harness become damaged, then the complete fibre optic harness needs replacing at considerable cost.

It is an aim of the present invention to obviate or reduce the above mentioned problem.

Accordingly, the present invention provides a light distribution unit for use with a light projector which projects light via light guides, the light distribution unit comprising a plurality of light distribution guides, a common end member which is positioned at a first end of the light distribution guides and which is formed by connecting together adjacent ends of the light distribution guides, and a light distribution arrangement which is positioned at a second end of the light distribution guides, and the light distribution arrangement being such that it has a plurality of outlet ports each connected to one of the light distribution guides and each for connection to a light guide for use in projecting light from the light projector via the light distribution unit to the predetermined place.

The light distribution unit of the present invention is advantageous in that the ends of individual light guides are able to be plugged into the light distribution unit and hence into the light projector. If damage to the end of one of the light guides should occur, then it is only necessary to replace that damaged light guide and it is not necessary to replace an entire fibre optic harness as currently occurs. Thus considerable savings in cost can be achieved. Further, an end user of a light projector is able to purchase a light projector with a minimum number of light guides and to be able to buy further light guides as may be necessary at a later date. It is not necessary for the end user to buy a completely new light guide harness. Still further, the use of the light distribution unit enables light guides of different lengths to be factory produced and held in stock. Individual light guides of different lengths can then be supplied to end users on request. This is much cheaper than producing complete light guide harnesses, for example fibre optic harnesses, of different lengths and of different numbers of light guides.

The light distribution unit may include blanking members for blanking off outlet ports that are not in use, that is those outlet ports that are not connected to light guides.

The light distribution unit may be one in which the common end member is in the form of a plug, and in which the blanking members are each in the form of a cap or plug. Other types of common end member and other types of blanking members may be used.

Usually, the light distribution unit will be one in which the light distribution guides are formed of the same material as the light guides. Preferably, the light distribution guides will be fibre optic light distribution guides. They may however also be fibre rod light distribution guides, polymer light distribution guides or they may be formed of any other suitable and appropriate materials.

The present invention also provides a light projector which projects light via light guides, which light projector comprises a housing, a lamp, a reflector and a light distribution unit, the light distribution unit comprising a plurality of light distribution guides, a common end member which is positioned at a first end of the light distribution guides and which is formed by connecting together adjacent ends of the light distribution guides, and a light distribution arrangement which is positioned at a second end of the light distribution guides, and the light distribution arrangement being such that it has a plurality of outlet ports each connected to one of the light distribution guides and each for connection to a light guide for use in projecting light from the light projector via the light distribution unit to a predetermined place.

The light projector may be one in which the light distribution unit is positioned substantially entirely inside the housing. Alternatively, the light projector may be one in which the light distribution unit is positioned substantially entirely outside the housing. Still further, the light projector may be one in which the light distribution unit is positioned partially in the housing and partially outside the housing, with the light distribution guides and the common end member being positioned in the housing and the light distribution arrangement being secured to the outside of the housing.

Preferably, the light reflector includes a cold mirror for receiving light from the reflector and reflecting it on to the common end member. The cold mirror is a mirror which allows infrared light to pass through the mirror but which reflects all other light. The use of a cold mirror helps to prevent an unwanted build up of focused heat. This in turn enables the light projector to operate without the need for a fan to distribute heat. The light projector of the present invention is thus advantageously able to work without the need for a heat dissipating fan and any heat generated by the lamp can be dissipated by the use of a heat sink and atmospheric cooling. The cold mirror may be positioned at an angle of 45°.

The light projector of the present invention may include a plurality of the light guides. The light guides are preferably fibre optic light guides but they may also be, for example, fibre rod light guides or polymer light guides. Any suitable and appropriate light guides may be employed.

The light projector may be used in or for display structures. Thus, for example, the light projector may be used to provide, via the light guides, a plurality of minature spot lights for a display cabinet. Alternatively, the light projector, via the light guides, may be used to accentuate lighting in any desired area such for example as an office area or a reception area.

The ends of the light guides which are brought together to form the common end member may be clustered together in any configuration, for example a hexagonal or a circular configuration. Generally, the ends of the light distribution guides will be clustered together such as to minimise on space between the individual ends of the light guides.

Embodiments of the invention will now be described solely by way of example and with reference to the accompanying drawings in which:
Figure 1 is a perspective view of a known light projector and part of a known fibre optic light harness;
Figure 2 is a cross section through the light projector shown in Figure 1;
Figure 3 is a perspective view of the fibre optic harness shown in Figure 1;
Figure 4 is a perspective view, partially broken away, of a first light projector of the invention;
Figure 5 is a perspective view of a second light projector of the invention;
Figure 6 is a perspective view of a light distribution unit for use in forming a third light projector of the invention; and
Figure 7 is a perspective view of extension apparatus for use in conjunction with a light projector of the invention.

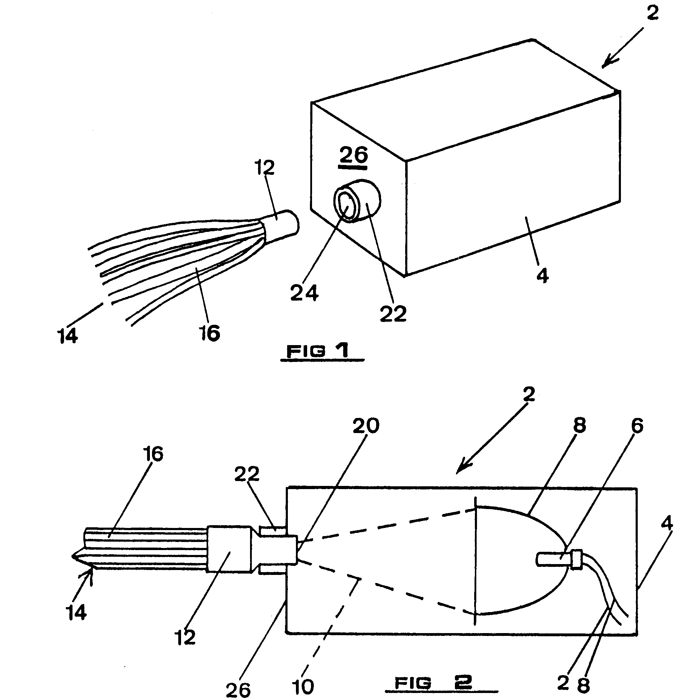

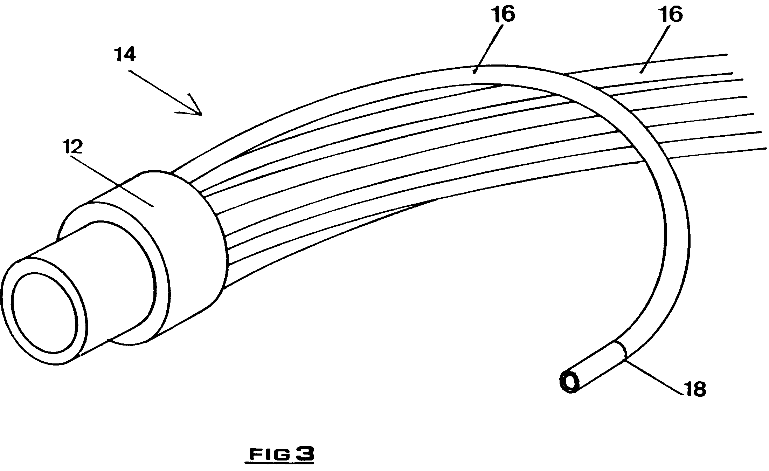

Referring to Figures 1 to 3, there is shown a known light projector 2 comprising a housing 4, a lamp 6 and a reflector 8. The reflector 8 is for concentrating and focusing light 10 from the lamp 6 on to a common end plug 12 forming part of a fibre optic harness 14 having fibre optic light guides 16 and end ferrules 18.

The light projector 2 operates such that the light 10 is concentrated at a focal point 20 which is coincident with the end of the common end plug 12 when it is pushed into a sleeve 22 defining an aperture 24 in an end wall 26 of the housing 4. The light 10 is thus able to pass through the common end plug 12 and along the fibre optic light guides 16 to the end ferrules 18. The end ferrules 18 can be located where desired to provide appropriate illumination, for example in a display cabinet or in a home or office area. Electrical power for the lamp 6 is provided via leads 28.

In Figure 1, the fibre optic light guides 16 have been shown separated for ease of illustration. The fibre optic light guides 16 are usually bunched together to form the fibre optic harness 14. In the event that either end of the individual fibre optic light guides 16 should become damaged or in the event that the common end plug 12 should become damaged, then the entire fibre optic harness 14 has to be replaced. This is expensive.

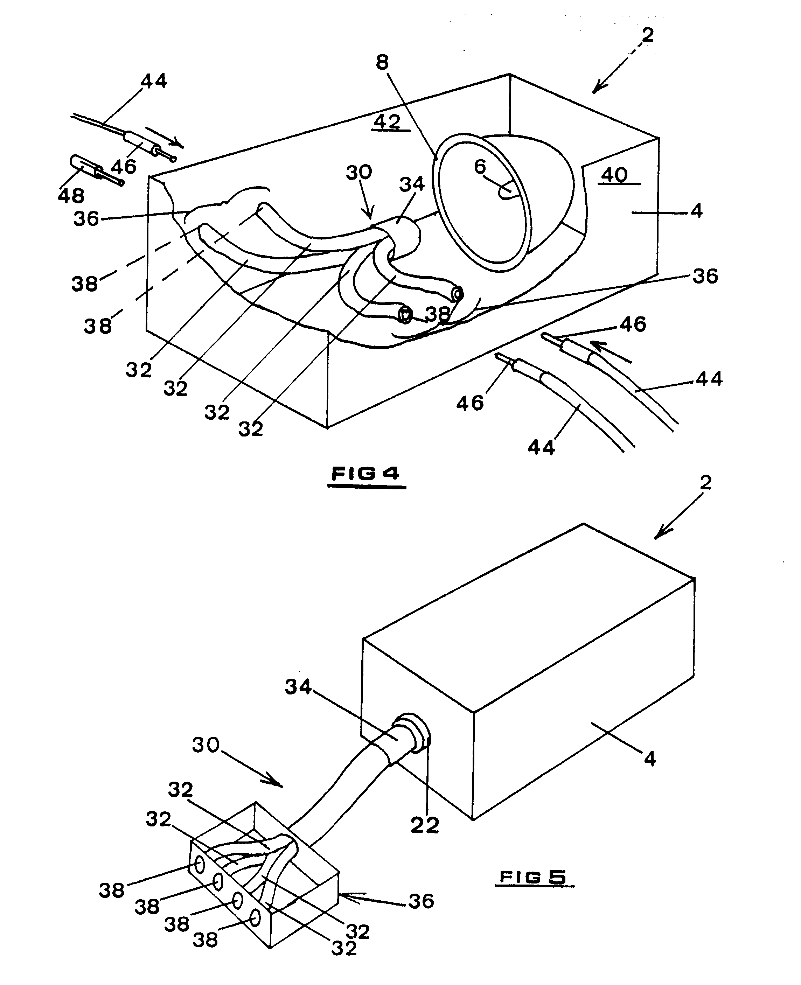

Referring now to Figure 4, there is shown a light projector 2 in which similar parts as in Figures 1 and 2 have been given the same reference numerals for ease of comparison and understanding.

In Figure 4, the light projector 2 is provided with a light distribution unit 30 which, as shown, is positioned substantially entirely inside the housing 4. The light distribution unit 30 comprises four light distribution guides 32 and a common end member 34 which is positioned at a first end of the light distribution guides 32. The common end member 34 is formed by connecting together adjacent ends of the light distribution guides 32.

The light distribution unit 30 further comprises a light distribution arrangement 36 which is positioned at a second end of the light distribution guides 32 as shown. The light distribution arrangement 36 is such that it provides four outlet ports 38, two of these outlet ports 38 being in a side wall 40 of the housing 4 and two of these outlet ports 38 being in a side wall 42 of the housing 4.

The outlet ports 38 are thus such that light is supplied to each one of them via one of the light distribution guides 32. The outlet ports 38 are also such that they are available for connection to a light guide 44, and for this purpose, the light guides 44 are provided with plug-in ends 46 as shown. If it is desired not to use one or more of the outlet ports 38, then such outlet ports 38 can be blanked off using a blanking plug 48. Light passing from the lamp 6 and through the light distribution guides 32 to the light guides 44 can then be directed to any suitable and desired place, for example for illuminating an area or object.

Referring now to Figure 5, there is shown a light projector 2 in which the light distribution unit 30 is positioned substantially entirely outside the housing 4. In Figure 5, the light distribution unit 30 is such that the common end plug 34 locates in the sleeve 22. The ends of the light distribution guides 32 remote from the common end member 34 are located in a light distribution arrangement 36 which is in the form of a block. The outlet ports 38 are provided in this block.

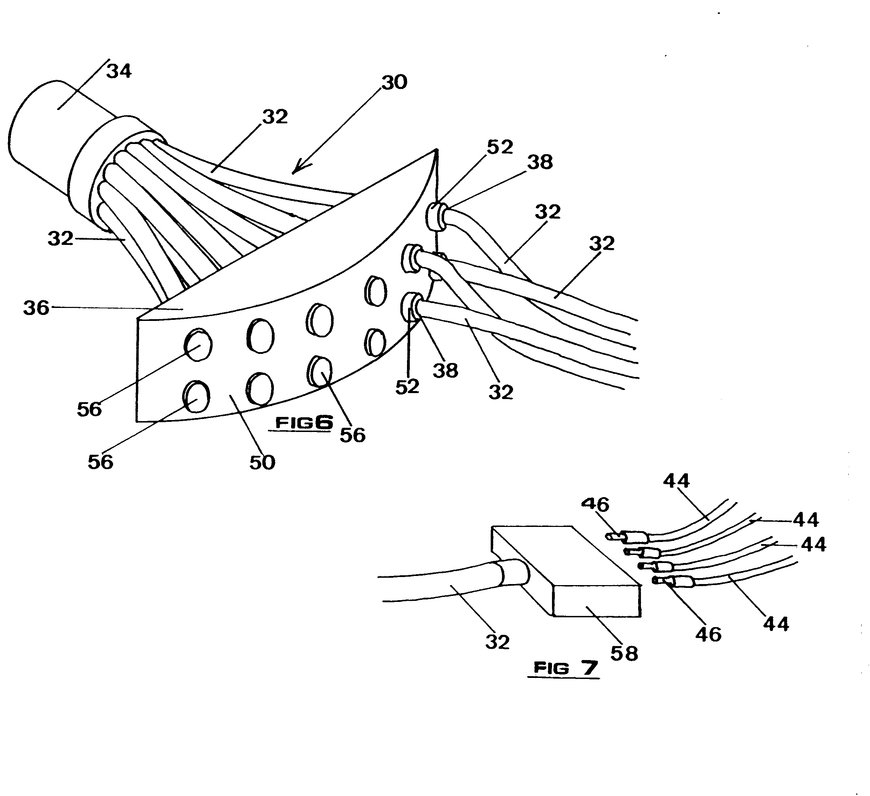

Figure 6 shows a light distribution unit 30 which is for being positioned partially in the housing 4 and partially outside the housing 4. More specifically, the light distribution guides 32 and the common end member 34 are for being positioned in the housing 4. The light distribution arrangement 36 is for being secured to the outside of the housing 4 by screws (not shown). The light distribution arrangement 36 has a curved front face 50 as shown and this curved front face 50 is provided with the outlet ports 38. The outlet ports 38 may be defined by screw-on fixtures 52 as shown.

Those outlet ports 38 in the curved front face 50 that are not in use are blanked off by blanking caps 56. The blanking caps 56 also serve to prevent dust from entering the outlet ports 38.

Figure 7 shows one of the light distribution guides 32 connected to a further light distributing arrangement 58. This further light distributing arrangement 58 may be, for example, the same as the light distributing arrangement 36 shown in Figure 5 or the same as the light distributing arrangement 36 shown in Figure 6.

The light projectors of the present invention are advantageous in that different numbers of light guides 44 can be employed, as can different lengths of light guides 44. Individual light guides 44 are able to be replaced if they should become damaged.

It is to be appreciated that the embodiments of the invention described above with reference to the accompanying drawings have been given by way of example only and that modifications may be effected. Thus, for example, the light distribution guides 32 and the light guides 44 are preferably made of optical fibres but other types of material may be employed. The light distribution arrangement 58 may be regarded as a coupling box which may sub-divide a light guide 44 into any suitable and appropriate number of further outlets, typically, two to four. Spring loaded couplers may be employed to ensure face to face contact of light guide ends. The illustrated shape of the light projector may be varied as may be required. The lamp may be of any suitable and appropriate type, for example metal halide, or low voltage. Electrical and/or electronic apparatus to operate the lamp may or may not be provided in the housing. In Figure 4, the outlet parts 38 can alternatively or additionally be provided in the end walls of the housing.

## Claims

1. A light distribution unit for use with a light projector which projects light via light guides, the light distribution unit comprising a plurality of light distribution guides, a common end member which is positioned at a first end of the light distribution guides and which is formed by connecting together adjacent ends of the light distribution guides, and a light distribution arrangement which is positioned at a second end of the light distribution guides, and the light distribution arrangement being such that it has a plurality of outlet ports each connected to one of the light distribution guides and each for connection to a light guide for use in projecting light from the light projector via the light distribution unit to a predetermined place.

2. A light distribution unit according to claim 1 and including blanking members for blanking off outlet ports not in use.

3. A light distribution unit according to claim 1 or claim 2 in which the common end member is in the form of a plug, and in which the blanking members are each in the form of a cap or a plug.

4. A light distribution unit according to any one of the preceding claims in which the light distribution guides are fibre optic light distribution guides.

5. A light projector which projects light via light guides, which light projector comprises a housing, a lamp, a reflector and a light distribution unit, the light distribution unit comprising a plurality of light distribution guides, a common end member which is positioned at a first end of the light distribution guides and which is formed by connecting together adjacent ends of the light distribution guides, and a light distribution arrangement which is positioned at a second end of the light distribution guides, and the light distribution arrangement being such that it has a plurality of outlet ports each connected to one of the light distribution guides and each for connection to a light guide for use in projecting light from the light projector via the light distribution unit to a predetermined place.

6. A light projector according to claim 5 in which the light distribution unit is positioned substantially entirely inside the housing.

7. A light projector according to claim 5 in which the light distribution unit is positioned substantially entirely outside the housing.

8. A light projector according to claim 5 in which the light distribution unit is positioned partially in the housing and partially outside the housing, with the light distribution guides and the common end member being positioned in the housing and the light distribution arrangement being secured to the outside of the housing.

9. A light projector according to any one of claims 5 to 8 and including a cold mirror for receiving light from the reflector and reflecting it on to the common end member.

10. A light projector according to any one of claims 5 to 9 and including a plurality of the light guides.
